Europäisches Patentamt

European Patent Office

Office européen des brevets

(19)

(11) Publication number: **0 2 1 5 862**
**B1**

(12) **EUROPEAN PATENT SPECIFICATION**

(45) Date of publication of the patent specification:
27.09.89

(51) Int. Cl.⁴: **B 01 D 21/00**, B 01 D 17/028,
B 01 D 17/038, E 03 F 5/16

(21) Application number: 86901825.9

(22) Date of filing: 11.03.86

(86) International application number:
PCT/DK 86/00021

(87) International publication number:
WO 86/05412 (25.09.86 Gazette 86/21)

(54) A LAMELLA SEPARATOR.

(30) Priority: 12.03.85 DK 1117/85

(43) Date of publication of application:
01.04.87 Bulletin 87/14

(45) Publication of the grant of the patent:
27.09.89 Bulletin 89/39

(84) Designated Contracting States:
AT BE CH DE FR GB IT LI LU NL SE

(56) References cited:
DE-A- 3 018 660
DE-C- 117 538
GB-A- 522 316
US-A- 1 960 904
US-A- 3 067 878
US-A- 3 886 064
US-A- 4 086 169

(73) Proprietor: JORGEN MOSBAEK JOHANNESSEN APS,
Aspevej 6 Stroby Egede, DK-4600 Koge (DK)

(72) Inventor: JOHANNESSEN, Jorgen, Mosbaek,
Aspevej 6 Stroby Egede, DK-4600 Koge (DK)

(74) Representative: Baillie, Iain Cameron et al, c/o Ladas &
Parry Isartorplatz 5, D-8000 München 2 (DE)

## Description

The invention concerns a process for separating heavy and/or light components from a liquid by means of lamellae as stated in the introductory portion of claim 1, and to a lamella separator for carrying out the process. Known lamella separators are shown and described in the DK Patent Application 3422/81, DE-B-2 250 873, SE-A-352 543 and US-A-3 898 164. It is common to these lamella separators that they are substantially based on flows in rectilinear paths and on a distribution of the influx to the lamella assembly and a subsequent gathering, providing different distances for the liquid to be treated and thus differences in he load of the lamellae. Another shared feature is that the light substances such as oil seep up through the lamella assembly and gather in a layer above it. This requires a large height of the overall structure or depth below the inlet. Further, most of the lamella assemblies are four-sides and cannot therefore appropriately be incorporated in a round well of pre-fabricated well rings since they cause a great waste volume.

In Figure 4 of Patent Document DE-A-117,538 there is shown a lamella separator with helical conical lamellae. This document, however, describes only separators that work by successive precipitation and generally have the problems set out above.

The object of the invention is to provide a process for separating heavy and/or light components from a liquid using a lamella separator which operates more efficiently than the known ones, and which can readily be adapted to various practical purposes, e.g. separation by floatation and/or gravitation of petrol, oil, fat, sand, sludge, etc, and for industrial purposes, such as, for example, sewage or waste water purification and aeration, concentration, recovery, etc.

The object is achieved in the manner stated in the characterizing portion of claim 1. Then, when passing through the channels, the liquid will be subjected to centrifugal forces which cause transverse flows owing to the friction between lamellae and liquid which carry the light and heavy materials out toward the distribution ring along the upper and lower side, respectively, of each channel. Therefore, these materials are concentrated at the outlet of the channels so that the light materials are separated by the discharge through openings in the bottom of the separator tank. The settling effect of the heavy materials and the self-cleaning properties of the lamella assembly are moreover promoted by the obliquely downward direction of the liquid flow. This permits the use of relatively small lamellae spacing and great flow rates, so that the lamella assembly has a very great capacity while taking up relatively little space. Further, because of the sharp turn in the flow direction at the upper edge of the lamellae, a first separation takes place, in particular of larger entrained parts, such as threads or fibres, which are removed from the liquid before they get down between the lamellae, where they might get stuck. The spiral arrangement of the lamella assembly moreover results in a very compact structure which lends itself for incorporation e.g. in cylindrical wells.

Claim 2 defines a particularly simple and expedient structure of the lamella assembly.

The embodiment of the lamella assembly defined in claim 3 causes the channels to be loaded one by one as the influx increases.

The light and heavy materials are separated effectively from the liquid at the outlet of each channel by means of the lamella separator embodiment defined in claim 4.

The constructional details of the lamella separator embodiment defined in claim 5 serve to guide the further flow course after separation of the light and heavy materials.

The structure defined in claim 6 serves to convey the liquid freed of light and heavy materials out of the lamella assembly in a simple and expedient manner.

The lamella separator embodiment defined in claim 7 lends itself for separation of a concentrate of both light and heavy components of supplied liquid. In normal operation of such a lamella separator, purified liquid will exit from the high-lying outlet, and liquid with a concentrate of impurities will exit through the concentrate outlet, which may be terminated at various levels, according to the working conditions.

The lamella separator embodiment defined in claim 8 provides a considerable increase in the hydraulic capacity of the separator in case of temporary, particularly great loads, e.g. in connection with very heavy showers.

The lamella separator defined in claim 9 lends itself particularly for use as a floor outlet. Both the inner cylinder and the bell serve to collect separated light liquid, e.g. oil or fat. The hopper defined in claim 10 serves to discharge the purified excess water which has been conveyed up into the lower portion of the inner cylinder.

The invention will be explained below with reference to the drawing, in which

fig. 1 is a vertical section through an embodiment of the lamella separator of the invention,

fig. 2 is a section along the line II-II in fig. 1,

fig. 3 is a vertical section on a larger scale through part of the lamella separator shown in Fig. 1,

fig. 4 is a vertical section on an even larger scale through part of the lamella separator shown in fig. 1,

fig. 5 is a section along the line V-V in fig. 4,

fig. 6 is a vertical section along the line VI-VI in fig. 4,

fig. 7 is a vertical section through a second embodiment of the lamella separator of the invention,

fig. 8 is a section along the line VIII-VIII in fig. 7,

fig. 9 is a vertical section through a third embodiment of the lamella separator of the invention, and

fig. 10 is a section along the line XII-XII in fig. 9.

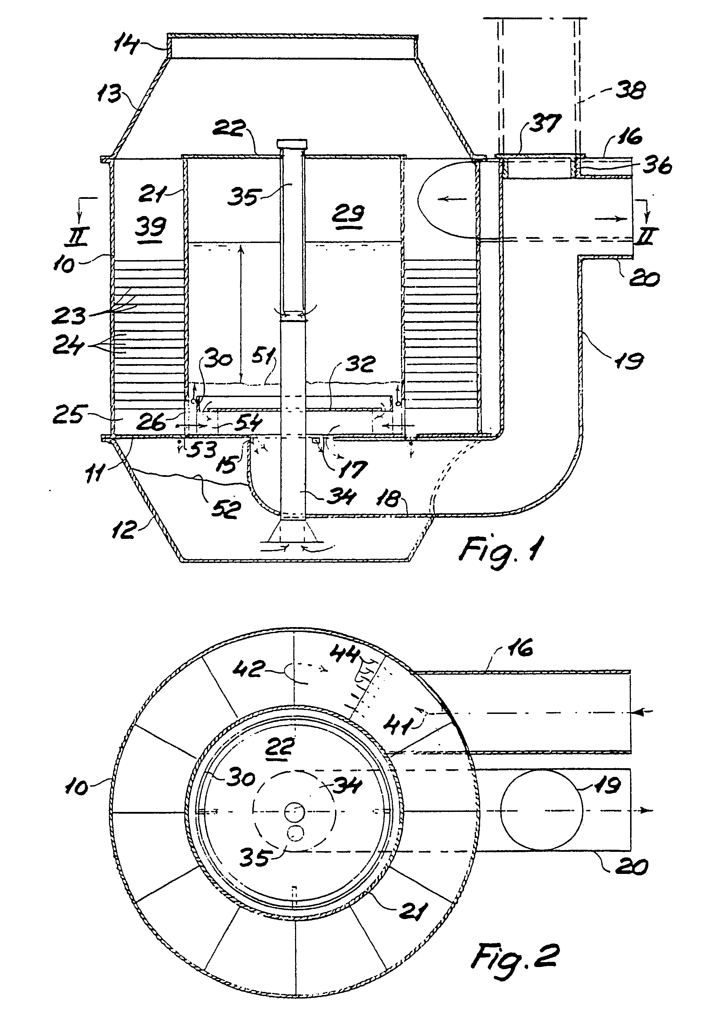

The lamella separator shown in fig. 1 has a cylindrical tank 10, which is buried in the ground, and which has a bottom 11 of a suitable material, e.g. stainless steel or glass fibre reinforced plastics. A frusto-conical bottom vessel 12 is placed below the bottom 11. The tank terminates upwardly in a cone 13 with a neck 14. Just below the cone 13, the tank has an inlet 16 for liquid to be treated, which is so positioned as to impart a tangential component to the entering liquid flow. A central opening 17 in the tank bottom 11 communicates through a pipe 18 extending through the side wall of the bottom vessel 12 and a vertical riser pipe 19 with an outlet 20, which is disposed in parallel with and somewhat lower than the inlet 16, and which can be rotated together with the bottom cone 12 in any direction with respect to the inlet. Outlet openings 15 from the bottom vessel 12 are formed in the pipe 18 directly below the tank bottom 11.

An inner cylindrical wall 21, which stands on the tank bottom 11, extends upwards on a level with the upper edge of the tank and is upwardly covered by a hinged or removable cover 22. This cylindrical wall defines a chamber 29 for collection of separated light liquid.

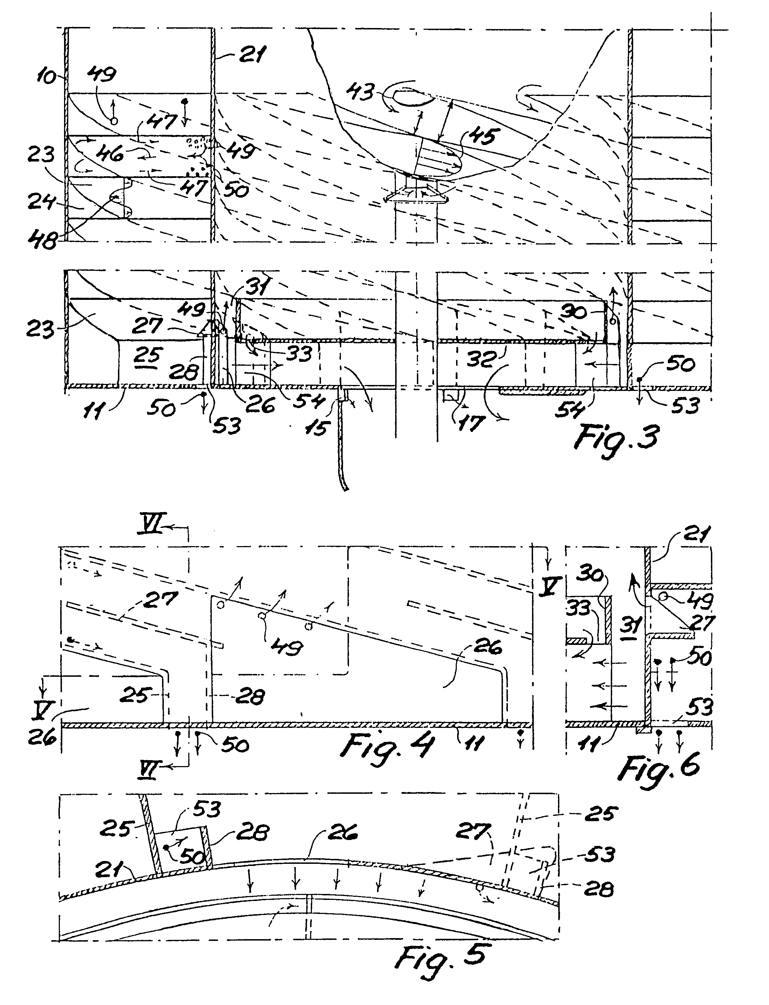

Between the cylinder wall 21 and the tank wall is placed a plurality of helicoid-shaped lamellae 23, which are screwed into one another and form spiral-shaped liquid channels 24. The upper edges of the lamellae are flush with the lower portion of the outlet 20. As shown more clearly in figs. 3 and 4, each lamella terminates downwardly in a vertical wall 25, which extends downwardly to the tank bottom 11. These vertical walls may be formed in different ways, or they may be provided with projecting edges against the flow preventing occurrence of unfavourable eddies at outlet openings 26 in the cylindrical wall 21 for the light liquid chamber 29 and the bottom vessel 12, said openings being trapezoidal and disposed opposite the lower parts of the lamellae 23. The walls 25 may be placed radially or form an angle with the radii so that an eddy course is imparted to the main flow toward the central opening 17, resulting in centrifugal forces which may be adjusted so as to provide desired sub-flows to the light liquid chamber and the bottom vessel.

Triangular sub-lamellae 27 are disposed between the lower portions of the lamellae 23, extending a small distance in over the openings 26. These sub-lamellae too are connected with vertical walls 28, which extend downwardly to the tank bottom 11 along the vertical front egde of the openings 26. A rectangular opening 53, through which separated heavy substances may sink down to the bottom vessel 12, is formed in the tank bottom 11 between each pair of vertical adjacent walls 25 and 28.

A ring-shaped baffle 30 is placed opposite the upper part of the openings 26 inside and co-axially with the cylinder wall 21, said baffle defining together with the wall 21 a ring-shaped liquid passage 31. A circular division plate 32 is flush with the lower edge of the ring baffle 30 and has a somewhat smaller diameter than the baffle so that a second ring-shaped liquid passage 33 is formed between these two parts. The ring baffle 30 and the partition plate 32 rest on radial, plate-shaped brackets 54.

A discharge pipe 34 for heavier material extends from a point in the vicinity of the bottom of the bottom vessel 12 upwardly through the partition plate 32, the cylinder 21 and its cover 22, and a discharge pipe 35 for liquid likewise extends upwardly through the cover 22 from the light liquid chamber 29.

As shown, the riser pipe 19 has an upward extension 36 with a cover 37 and is accessible from above through a pipe 38 shown in broken lines.

As mentioned before, the liquid entering from the inlet 16 will flow substantially tangentially into the ring-shaped space 39 above the lamella assembly, which is defined by the cylinder wall 21 and the tank wall and which forms an inlet or distribution space. As shown by arrows 41 and 42, the liquid normally enters with a flow direction opposite to that of the liquid down through the channels 24. This reduces the risk of thread-like or fibre-like solids in the liquid getting stuck in the lamella edges. This risk may be additionally reduced in that, as shown for one lamella in fig. 3, the upper edges of the lamellae are formed with a rounded bend 43 producing a constriction in the channel inlet which in combination with short or through-going grate bars 44, as indicated in fig. 2 prevents objects greater than the lamella spacing from getting into the lamella assembly.

The liquid flows from the ring-shaped distribution space 39 down through the spiral-shaped channels 24, where — because of the curved path — it will be subjected to a centrifugal force which is directed away from the vertical central axis of the lamella assembly. This centrifugal force depends upon the flow rate which, as shown by the curve 45 in fig. 3, is greatest halfway between the lamellae and smallest close to their surfaces because of the friction. Thus, an outward flow is produced, as shown by arrows 46 in fig. 3, halfway between the lamellae, and inward flows close to the lamellae, as shown by arrows 47. These flows cause light substances and heavy substances to be transported simultaneously toward the inner cylindrical wall 21, the light substances being represented in the drawing by small circles 49 and rising toward the underside of the lamellae, and the heavy substances being represented in the drawing by small, filled circles 50 and sinking down toward the upper side of the lamellae. The rate distribution in the transverse flows is shown by the curve 48 in fig. 3.

The separated substances exit at the lower end of the lamellae through the openings 26 in the cylindrical wall 21 and are guided by the ring baffle 30 up into the light liquid chamber 29 and down into the bottom vessel 12, respectively. In fig. 1, the numeral 51 represents a partition face betweeen the flowing liquid and the separated light liquid, which may e.g. be oil or fat, and the numeral 52 represents a partition face betweeen the liquid and the separated heavy substances, which may e.g. be sand or sludge. The sub-lamellae 27 at the outlet ends of the channels 24 support the separation of light and heavy substances. The vertical walls 25 cause the circulation of the flowing liquid to be stopped at the outlet from the lamellae assembly so that this liquid will flow radially inwardly from all sides toward the outlet opening 17 in the tank bottom 11. The water passage 33 between the ring baffle 30 and the partition plate 32 and the outlet openings 15 in the outlet pipe 18 ensure a certain discharge of purified liquid which corresponds to or is smaller than the separation capacity of the light liquid chamber 29 and the heavy substance bottom vessel 12, respectively.

If it is desired to aerate the liquid during the separation process or separately, air injection nozzles (not shown) may be placed on the underside of the lamellae at the outlet end. The injected amount of air must move all the way round before it gets up to the surface, and this distance in combination with the fact that the air is to move against the flow direction of the liquid gives the air a very long residence time in the liquid. The transverse flow ensures continuous exchange of the liquid in the contact face with the air.

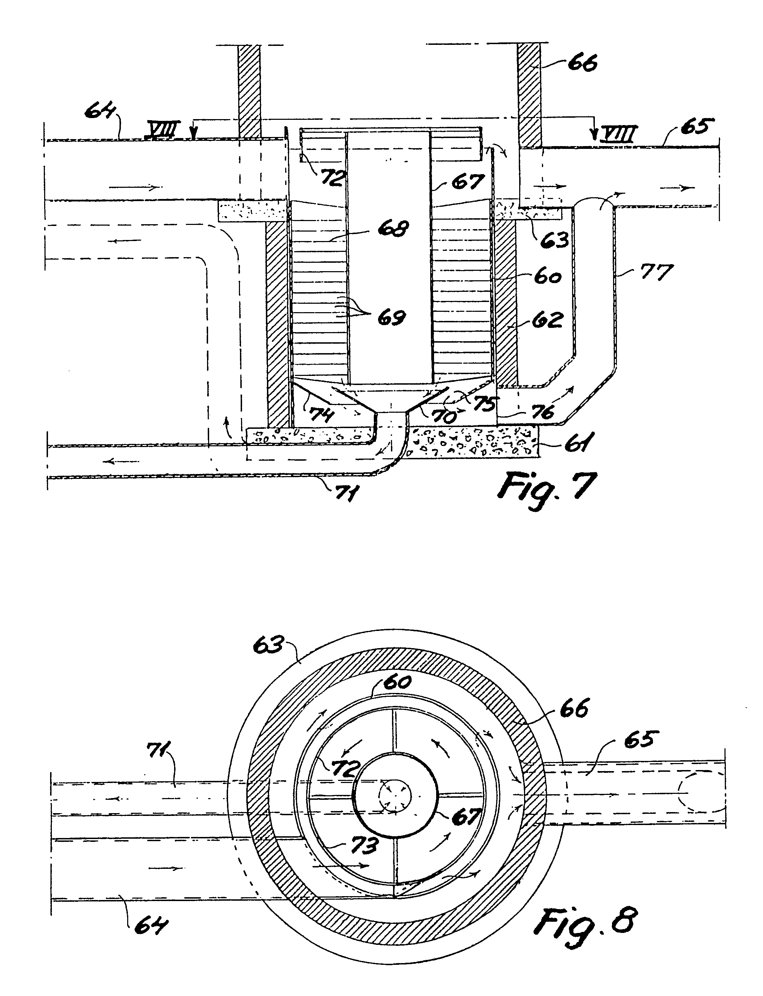

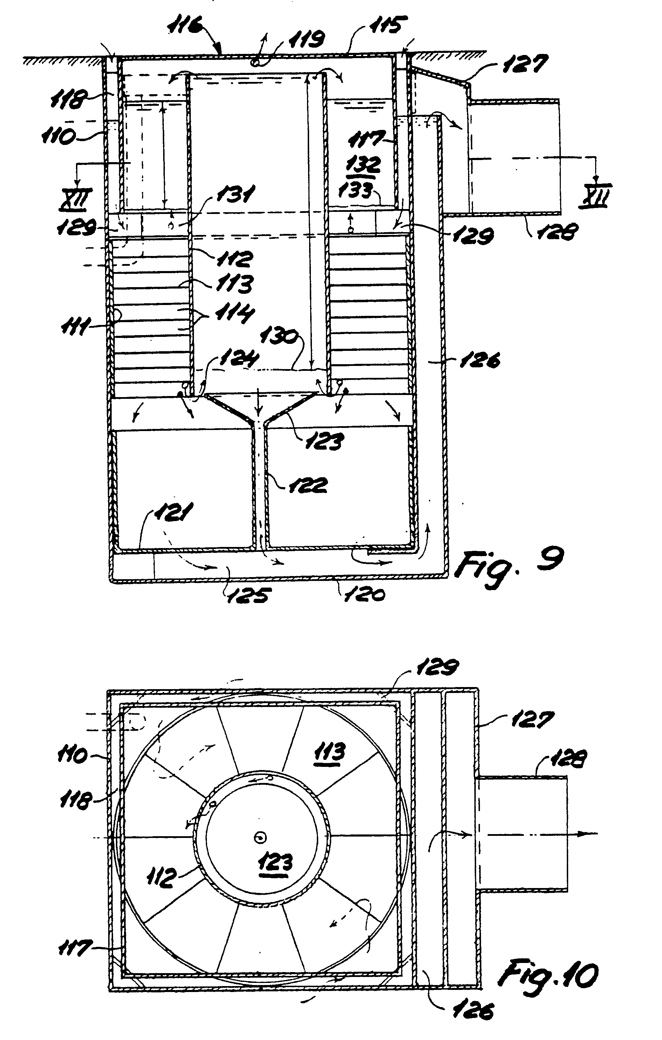

The lamellae separator shown in fig. 7 and 8 has an outer cylindrical wall 60 resting on a concrete base 61 and sorrounded by a concrete pipe 62. The upper edge of said pipe mounts a concrete ring 63 which forms support for a tangential inlet 64 and an outlet 65 as well as for another concrete pipe 66 having a somewhat larger diameter than the pipe 62. The cylinder wall 60 has at its lower end an opening 76 communicating with the liquid outlet 65 through a riser pipe 77. The centre of the cylinder 60 accomodates an inner cylindrical wall 67, and a lamellae assembly 68 with spiral-shaped liquid channels 69 is positioned between the two cylinders. A hopper 70 is placed immediately below the inner cylinder 67, with its upper edge extending a distance in below the lamella assembly 68 and its downwardly directed end connected with a concentrate outlet 71. A ring-shaped, conical guide baffle 74 having substantially the same apex angle as the hopper 70 extends from the outer cylinder wall 60 immediately below the lamella assembly 68 obliquely downwardly and inwardly and forms together with the hopper a ring-shaped liquid channel 75. A cylindrical baffle 72 is placed around the upper part of the inner cylinder, said baffle having a somewhat smaller diameter than the diameter of the outer cylinder 60 and extending a distance down under its upper edge and in front of the inlet 64. The baffle has an opening 73 aligned with this inlet.

As explained above, both light and heavy substances in liquid flowing through the channels 69 of the lamella assembly will move toward the inner cylinder 67. Heavy substances will run down the hopper 70 and out through the concentrate outlet 71. Light substances will move up into the inner cylinder 67; but some will be entrained by the liquid flow out through the concentrate outlet 71. When the supplied amount exceeds the hydraulic capacity of the lamella assembly, liquid entering through the opening 73 in the ring baffle 72 produces therein an eddy in which some separation will take place, and overflow will take place from the ring-shaped chamber between the ring baffle and the lamella assembly over the upper edge of the outer cylinder 60 directly to the liquid outlet 65. This causes a great increase in the hydraulic capacity of the lamella separator so that it will e.g. be capable of transporting the large amounts of water that may occur in case of very heavy showers.

The concentrate outlet 71 may optionally be positioned at a higher level, as shown in broken lines in fig. 7, so that the lamella assembly operates in an immersed state in case of a small load, and in that event light substances are collected in the inner cylinder 67, which may optionally partially be blocked by a horizontal, circular plate (not shown) which is substantially level with the lower edge of the cylinder.

The lamella separator shown in figs. 9 and 10 is particularly intended for use as a floor outlet. It has a tank 110 of square cross-section in the shown embodiment. The central portion of this tank accommodates an outer cylindrical wall 111, which is tangential to the tank walls. Further, the tank contains an inner cylindrical wall 112 which is coaxial with the cylinder 111 and whose lower edge is flush with the lower edge of this cylinder. A lamella assembly 113 with spiral-shaped channels 114 is mounted between the two cylinders.

The top edge of the inner cylinder 112 is disposed a small distance below top wall 115 of a square bell 116 which is flush with the upper edge of the tank. The side walls 117 of the bell 116 in combination with the tank walls define relatively narrow inlet channels 118 for the liquid to be treated. The bell 116 has a vent hole 119 at the top. The lower edge of the bell is disposed a distance above the lamella assembly 113 and rests on brackets 129 in the tank corners.

A cylindrical container 121 for collection of heavy substances, such as e.g. sand, is placed at the bottom of the tank 110, but a distance above its bottom 120.

A pipe 122 extends from a hole in the centre of the bottom of the container 121 upwardly to a hopper 123, whose upper edger is substantially flush with the lower edge of the cylinder 112 and defines together with the cylinder a ring-shaped passage 124. The space 125 between the bottom of the container 121 and the tank bottom 120 communicates with an outlet box 127 with an outlet 128 through a riser pipe 126.

The liquid supplied through the inlet channels 118 flows from the ring-shaped inlet space 131 between the bell 116 and the lamella assembly 113 down through the spiral-shaped channels 114 of the assembly 113. Sand in the liquid falls from the part of the lower edge of the lamella assembly closest to the inner cylinder 112 down into the container 121, while light liquid plus part of the carrier liquid rises in the cylinder 112 through the ring-shaped passage 124. A partition face between the carrier liquid and the light liquid is shown at 130 in fig. 9. When the light liquid level has reached the upper edge of the cylinder 112, additional supply will make it flow over this edge and down into space 132 between the bell walls 117 and the inner cylinder 112. This space also receives light liquid and carrier liquid directly from the ring-shaped inlet space 131. A partition face between the two liquids is shown at 133. The carrier liquid above the hopper 123 flows through it, the pipe 122, the space 125 and the riser pipe 126 up to the outlet box 127 and exits through the outlet 128. When the container 121 has been filled with sand and the bell 116 with light liquid, the light liquid starts gathering in the inlet channels 118 and so high that it can be seen that discharge is required. The main flow of carrier liquid from the lamella channels 114 takes place out in the corners between the container 121 and the tank walls 110 to the space 125.

As shown and described in WO 86/05535 (priority: 12.03.85; filing: 11.03.86; publication: 25.09.86) a lamella separator according to the invention may also advantageously be incorporated in a light liquid tap of the type mentioned in said application, No. 1116/85.

The lamelle separator of the invention may be constructed in very big and quite small sizes and may be used for many different purposes. It may e.g. be adapted to be placed on a trailer or a truck for turnout purposes in case of oil leaks into internal water streams and in case of failure in municipal plants. It may also be installed in a vessel for oil cleaning in maritime environments, or it may be made floating by means of floats. It may also be incorporated in closed systems working with both positive and negative pressure, and — as a closed unit removably suspended on close-fitting inlet and outlet nozzles — the lamella assembly may be mounted interiorly on the side of a larger collection tank, with the lamella assembly diverting a concentrate of light or heavy substances or both to the tank where the separation capacity of the tank itself is utilized for the final separation. The constructional details of the lamella separation may be amended in many ways according to the intended use.

## Claims

1. A process for separating heavy and/or light components from a liquid whereby the liquid flows through a spiral flow channel (24; 69; 114) formed by means including lamellae (23; 68; 113), characterized in that the liquid enters the flow channel (24; 69; 114) via an inlet at an upper end and leaves the channel via an outlet at a lower end, whereby the liquid is subjected to a centrifugal force which causes the light components to accumulate at the underside of the lamellae and/or the heavy components at the upperside of the lamellae, and in that the components so accumulated are discharged upwardly and downwardly, after leaving the lower end of the channel

2. A lamella separator having the means for carrying out the process of claim 1, characterized in that the lamellae (23; 68; 113) terminate upwardly at a height increasing in the inlet direction.

3. A lamella separator having the means for carrying out the process of claims 1 or a lamella separator according to claim 2 in either case, characterized in that the lamella separator comprises a tank (10; 110) with a bottom (11; 120) and that the channel (24; 69; 114) is defined inwardly and outwardly by an inner and an outer cylindrical wall (21, 10; 111, 112) respectively.

4. A lamella separator according to claim 3, characterized in that the inner cylindrical wall (21) is formed with an opening (26) from the lower end of the channel (24), that a vertical plate (25) is placed at the lower edge of each lamella extending from said lamella down to the tank bottom, and that a bottom vessel (12) is mounted below the tank (10), said tank bottom being formed with outlet openings (53) for heavier substances, disposed at the outer side of the inner cylindrical wall (21).

5. A lamella separator according to claim 3 or 4, characterized by a ring-shaped, vertical baffle (30) placed inside and at some radial distance from the inner cylindrical wall (21) and opposite the upper portion of the openings (26) and a circular partition-plate (32) of somewhat smaller diameter than the baffle.

6. A lamella separator according to claim 3, 4 or 5, characterized in that the tank bottom (11) has a central opening (17) which is connected with the outlet through a pipe extending through the sides of the bottom vessel and a riser pipe (19) mounted outside the tank (10), and that a ring-shaped outlet space is provided below the lamella assembly (23) or part thereof.

7. A lamella separator according to claim 3, further including a high-lying liquid outlet (Figures 7 and 8), characterized in that a hopper (70) is placed immediately below an inner cylinder (67) defined by the inner cylindrical wall (67) (Figure 7), the upper, greatest diameter of said hopper (70) being somewhat greater than the cylinder diameter, the lower end of said hopper being connected with an outlet (71) for concentrate.

8. A lamella separator according to claim 3 or 7, wherein the inlet is a tangentially directed side inlet (64), and a ring-shaped, cylindrical baffle (72) co-axial with the outer cylindrical wall (60) is placed opposite the upper part of said inlet, said baffle (72) being positioned at some radial distance from the outer wall (60) and defining toghether with the upper part of the inner cylindrical wall (67) a vortex chamber, said baffle having an inlet opening facing the inlet.

9. A lamella separator according to claim 3, characterized in that the inner cylindrical wall (112) extends upwardly to the vicinity of the upper edge of the tank (110), and that the upper part of said cylinder is surrounded by an upwardly vented bell (116), whose top wall (115) is substantially level with the upper edge of the tank, and whose walls (117) together with the upper part of the tank wall or walls define a ring-shaped inlet channel (118) for the liquid to be treated, said wall having its lower edge disposed a distance above the lamellae (113) (Figures 11 and 12).

10. A lamella separator according to claim 9, characterized in that a hopper (123) is placed at the lower end of the inner cylindrical wall (112), said hopper (123) having a somewhat smaller diameter than the inner wall (112) and communicating with the separator liquid outlet (128) through a riser pipe (126), and that a container (121) for collection of heavy substances is mounted in the bottom of the tank (116).

## Patentansprüche

1. Verfahren zum Abtrennen von schweren und/oder leichten Bestandteilen aus einer Flüssigkeit, die durch einen spiralenförmigen Strömungskanal (24; 69; 114) fließt, der durch Lamellen (23; 68; 113) aufweisende Mittel begrenzt ist, dadurch gekennzeichnet, daß die Flüssigkeit in den Strömungskanal (24; 69; 114) über einen am oberen Ende angeordneten Eintritt eintritt und den Strömungskanal über einen am unteren Ende angeordneten Austritt verläßt, so daß die Flüssigkeit einer Zentrifugalkraft unterworfen wird, die die leichten Bestandteile veranlaßt, sich auf der Unterseite von Lamellen anzusammeln, und die leichten Bestandteile veranlaßt, sich auf der Oberseite der Lamellen anzusammeln, und daß die derart angesammelten Bestandteile nach dem Verlassen des unteren Endes des Kanals aufwärts und abwärts ausgetragen werden.

2. Lamellentrennvorrichtung mit den Mitteln zum Durchführen des Verfahrens nach Anspruch 1, dadurch gekennzeichnet, daß die Lamellen (23; 68; 113) aufwärts in einer in der Eintrittsrichtung zunehmenden Höhe enden.

3. Lamellentrennvorrichtung mit den Mitteln zum Durchführen des Verfahrens nach Anspruch 1 oder Lamellentrennvorrichtung nach Anmspruch 2, jeweils dadurch gekennzeichnet, daß die Lamellentrennvorrichtung einen Behälter (10; 110) mit einem Boden (11; 120) besitzt und daß der Kanal (24; 69; 114) einwärts und auswärts von einer inneren bzw. einer äußeren zylindrischen Wand (21; 10; 111, 112) begrenzt ist.

4. Lamellentrennvorrichtung nach Anspruch 3, dadurch gekennzeichnet, daß die innere zylindrische Wand (21) mit einer Öffnung (26) vom unteren Ende des Kanals (24) ausgebildet ist, daß am unteren Rand jeder Lamelle eine vertikale Platte (25) vorgesehen ist, die sich von der Lamelle abwärts bis zum Behälterboden erstreckt, und daß unter dem Behälter (10) ein Bodengefäß (12) montiert ist, das mit auf der Außenseite der inneren zylindrischen Wand (21) angeordneten Öffnungen (53) für schwerere Substanzen ausgebildet ist.

5. Lamellentrennvorrichtung nach Anspruch 3 oder 4, gekennzeichnet durch eine ringförmige vertikale Prallwand (30), die innerhalb der inneren zylindrischen Wand (21) und im Radialabstand von ihr und gegenüber dem oberen Teil der Öffnungen (26) und gegenüber einer kreisförmigen Trennplatte (32) angeordnet ist, die im Durchmesser etwas kleiner ist als die Prallwand.

6. Lamellentrennvorrichtung nach Anspruch 3, 4 oder 5, dadurch gekennzeichnet, daß der Behälterboden (11) eine zentrale Öffnung (17) besitzt, die mit dem Austritt durch ein die Seiten des Bodengefäßes durchsetzendes Rohr und durch ein außerhalb des Behälters (10) montiertes Steigrohr (19) verbunden ist.

7. Lamellentrennvorrichtung nach Anspruch 3 mit einem hochgelegenen Flüssigkeitsauslaß (Figuren 7 und 8), dadurch gekennzeichnet, daß ein Trichter (70) unmittelbar unter einem inneren Zylinder (67) angeordnet ist, der von der inneren zylindrischen Wand (67) (Figur 7) begrenzt ist, daß der obere, größte Durchmesser des Trichters (70) etwas größer ist als der Zylinderdurchmesser und daß das untere Ende des Trichters mit einem Austritt (71) für Konzentrat verbunden ist.

8. Lamellentrennvorrichtung nach Anspruch 3 oder 4, dadurch gekennzeichnet, daß der Eintritt ein tangential gerichteter Seiteneintritt (64) ist und daß dem oberen Teil des Eintritts eine mit der äußeren zylindrischen Wand (60) koaxiale zylindrische Prallwand (72) gegenüberliegt, die im radialen Abstand von der äußeren Wand (60) an geordnet ist und zusammen mit dem oberen Teil der inneren zylindrischen Wand (67) eine Wirbelkammer bildet und eine dem Eintritt zugekehrte Eintrittsöffnung besitzt.

9. Lamellentrennvorrichtung nach Anspruch 3, dadurch gekennzeichnet, daß die innere zylindrische Wand (112) sich aufwärts in den Bereich des oberen Randes des Behälters (110) erstreckt und daß der obere Teil des Zylinders von einer Glocke (116) für einen Druckausgleich nach oben umgeben ist, deren Deckwand (115) im wesentlich auf dem Niveau des oberen Randes des Behälters angeordnet ist und deren Wände (117) zusammen mit dem oberen Teil der Behälterwand oder -wände einen ringförmigen Eintrittskanal (118) für die zu behandelnde Flüssigkeit begrenzen, wobei der untere Rand dieser Wand im Abstand oberhalb der Lamellen (113) angeordnet ist. (Figuren 11 und 12).

10. Lamellentrennvorrichtung nach Anspruch 9, dadurch gekennzeichnet, daß am unteren Ende der inneren zylindrischen Wand (112) ein Trichter (123) angeordnet ist, der im Durchmesser etwas kleiner ist als die innere Wand (112) und der mit dem Flüssigkeitsaustritt (128) der Trennvorrichtung durch ein Steigrohr (126) in Verbindung steht, und daß im Boden des Behälters (116) ein Behälter (121) zum Sammeln von schweren Substanzen montiert ist.

## Revendications

1. Procédé de séparation des constituants lourds et/ou légers d'un liquide, du type selon lequel le liquide s'écoule au travers d'un canal d'écoulement en spirale (24; 69; 114) formé par des moyens comprenant des lamelles (23; 69; 114), caractérisé en ce que le liquide entre dans le canal d'écoulement (24; 69; 114) par une entrée à l'extrémité supérieure et le quitte par une sortie à l'extrémité inférieure, le liquide étant soumis à une force centrifuge qui force les composants légers à s'accumuler du côté inférieur des lamelles et/ou les composants lourds du côté supérieur des lamelles, et en ce que les composants ainsi accumulés sont dégagés vers le haut et vers la bas, après qu'ils ont quitté l'extrémité inférieure du canal.

2. Séparateur à lamelles pour mettre en œuvre le procédé de la revendication 1, caractérisé en ce que les lamelles (23; 68; 113) se terminent vers le haut à une hauteur croissante dans la direction de l'ouverture.

3. Séparateur à lamelles pour mettre en œuvre le procédé de la revendication 1 ou séparateur à lamelles selon la revendication 2, caractérisé en ce que le séparateur à lamelles comprend une cuve (10, 110) et un fond (11; 120) et en ce que le canal (24; 69; 114) est formé vers l'intérieur et vers l'extérieur par des parois cylindriques (21, 10; 111, 112) respectivement intérieure et extérieure.

4. Séparateur à lamelles selon la revendication 3, caractérisé en ce que la paroi cylindrique extérieure (21) comporte une ouverture (26) à l'extrémité inférieure du canal (24), en ce qu'une plaque verticale (25) est placé au bord inférieur de chaque lamelle pour s'étendre vers le bas desdites lamelles jusqu'au fond de la cuve et en ce qu'un récipient de fond (12) est monté en dessous de la cuve (10), ledit fond de cuve comportant des ouvertures (53) de sortie pour les substances les plus lourdes, disposées du côté extérieur de la paroi cylindrique intérieure (21).

5. Séparateur à lamelles selon la revendication 3 ou 4, caractérisé par une cloison annulaire verticale (30) placée à l'intérieur et à une certaine distance radiale de la paroi cylindrique intérieure (21) et en face de la partie supérieure des ouvertures (26) et une plaque de séparation circulaire (32) de diamètre quelque peu inférieur à ladite cloison.

6. Séparateur à lamelles selon la revendication 3, 4 ou 5, caractérisé en ce que le fond de cuve (11) comporte une ouverture centrale (17) qui est reliée avec la sortie par un tuyau s'étendant à travers les côtés du récipient de fond et une colonne montante (19) disposée extérieurement à la cuve (10), et en ce qu'un espace de sortie annulaire est prévu en dessous de l'ensemble de lamelles (23) ou d'une partie de celui-ci.

7. Séparateur à lamelles selon la revendication 3, comprenant en outre une sortie de liquide haut placée (figures 7 et 8), caractérisé en ce qu'une trémie (70) est placée juste en dessous d'un cylindre intérieur (67) formé par la paroi cylindrique intérieure (67) (figure 7), le plus grand diamètre en haut de ladite trémie (70) étant quelque peu supérieur au diamètre du cylindre, l'extrémité inférieure de ladite trémie étant reliée à une sortie (71) de concentré.

8. Séparateur à lamelles selon la revendication 3 ou 7, dans lequel l'entrée est une entrée latérale (64) dirigée tangentiellement, et une cloison cylindrique annulaire (72) coaxiale à la paroi cylindrique extérieure (60) est placée en face de la partie supérieure de ladite entrée, ladite cloison (72) étant disposée à une certaine distance radiale de la paroi extérieure (60) et formant avec la partie supérieure de la paroi cylindrique intérieure (67) une chambre tourbillonnaire, ladite cloison ayant une ouverture d'entrée faisant face à l'entrée.

9. Séparateur à lamelles selon la revendication 3, caractérisé en ce que la paroi cylindrique intérieure (112) s'étend vers le haut jusqu'au voisinage du bord supérieur de la cuve (110) et en ce que la partie supérieure dudit cylindre est entourée par une cloche (116) à évents vers le haut, dont la paroi supérieure (115) est sensiblement au niveau du bord supérieur de la cuve, et dont les parois (117) forment avec la partie supérieure de la ou des parois de la cuve un canal d'entrée annulaire (118) pour le liquide à traiter, ladite paroi ayant son bord inférieur situé à distance au-dessus des lamelles (113) (figures 11 et 12).

10. Séparateur à lamelles selon la revendication 9, caractérisé en ce qu'une trémie (123) est placée à l'extrémité inférieure de la paroi cylindrique intérieure (112), ladite trémie (123) ayant un diamètre quelque peu inférieur à la paroi intérieure (112) et communiquant avec la sortie (128) de liquide du séparateur par une colonne montante (126), et en ce qu'un conteneur (121) destiné à recueillir les substances lourdes est monté sur le fond de la cuve (110).

Fig. 1

Fig. 2

**Fig. 3**

**Fig. 4**

**Fig. 6**

**Fig. 5**

Fig. 7

Fig. 8

Fig. 9

Fig. 10